# FASCICULE DE BREVET EUROPEEN

(11) **EP 2 324 738 B1**
(45) Date de publication et mention de la délivrance du brevet: **30.05.2012**
(21) Numéro de dépôt: 10191852.2
(22) Date de dépôt: 19.11.2010
(51) Int. Cl.: A47G 1/16, F16G 11/04

(54) **Dispositif de suspension d'éléments sur un mur**
Vorrichtung zum Aufhängen von Elementen an einer Wand
Device for suspending items on a wall

(30) Priorité: 20.11.2009 FR 0905584
(43) Date de publication de la demande: 25.05.2011
(73) Titulaire: Civic Industrie Anciens Etablissements Heubes et Cie, 94430 Chennevieres Sur Marne (FR)
(72) Inventeur: Darmon, Roger, 75016, Paris (FR); Darmon, Laurent, 94150, Rungis (FR)
(74) Mandataire: Monlouis, Patrick

(56) Documents cités:
- DE-U1-202004 013 068
- DE-U1-202005 011 418
- FR-A1- 2 659 840
- US-A- 437 470

## Description

La présente invention est relative à un dispositif de suspension d'éléments sur un mur du genre de ceux comprenant à une première extrémité un crochet coopérant avec un support fixé au mur ou au plafond et, à une seconde extrémité une attache, apte à l'accrochage de l'élément à suspendre, reliée par un moyen de liaison au crochet.

La nécessité de pouvoir accrocher des éléments sur les murs d'un local a donné lieu à la création de plusieurs dispositifs. En particulier, dans le cas ou une modification de l'agencement des divers éléments est souvent nécessaire, il est important de disposer d'un dispositif qui ne laisse pas de marques sur le mur.

Par ailleurs, dans le cas d'un logement loué, le locataire ne peut utiliser de vis ou d'autres systèmes similaires car de tels systèmes laissent des traces après leur enlèvement qui donnent lieu au versement d'indemnités au propriétaire.

Le système qui est tradionnellement utilisé dans un tel cas est appelé « système par cimaise », voir FR 2 659 840 A1. Un rail appelé aussi cimaise est fixé horizontalement sur un mur, généralement à proximité immédiate du plafond.

Une tige rigide appelée aussi tringle qui forme à une extrémité un crochet de suspension, est accrochée verticalement à un endroit choisi de la cimaise.

Un crochet coulissant le long de la tige permet de suspendre un tableau ou un cadre de photo ou n'importe quel objet ou élément.

Ce dispositif a notamment pour inconvénient d'utiliser une tige rigide de section conséquente qui reste largement visible et nuit à l'esthétique du dispositif. La tige est généralement en aluminium, acier ou en laiton ce qui génère un cout de fabrication important.

Du fait de son caractère peu esthétique et de son cout de fabrication important, ce dispositif est rarement utilisé par le grand public.

Un autre système de suspension est connu de DE 20 2005 011 418 U1.

L'invention a pour but, surtout de proposer dispositif de suspension d'éléments qui pallie ces inconvénients.

Selon l'invention, un dispositif du genre en question est décrit par la combinaison des caractéristiques des revendications 1 et 4.

Avantageusement, le culot comporte un filetage externe apte à coopérer avec un filetage interne situé sur la douille.

Le premier orifice longitudinal peut être excentré par rapport à l'axe du culot.

La portion filetée peut être solidaire du crochet ou de l'attache. II est également possible de prévoir une portion filetée pour le crochet et une également pour l'attache.

Le crochet peut être totalement rigide mais peut également comporter une partie flexible formant clip.

Le support peut comporter une rainure longitudinale apte à recevoir la partie du crochet formant clip.

La portion filetée peut être réalisée en matériau polymère.

La douille peut être réalisée en aluminium.

En variante une cale peut être intercalée entre le culot et la douille.

Le crochet peut comporter un doigt mobile en rotation par rapport au culot et à la douille.

D'autres caractéristiques et avantages de l'invention apparaîtront dans la description qui suit d'un mode de réalisation préféré avec référence aux dessins annexés mais qui n'a aucun caractère limitatif. Sur ces dessins :
Fig. 1 est une vue d'ensemble en perspective d'un dispositif de suspension selon l'invention.
Fig. 2 est une vue en coupe latérale, à plus grande échelle, de Fig. 1, montrant le montage d'un crochet selon l'invention.
Fig. 3 est une vue en coupe latérale, à plus grande échelle, de Fig. 1.
Fig. 4 est un détail de la zone de pincement du lien entre la douille et le culot.
Fig. 5 est une vue en perspective d'un autre mode de réalisation d'un support et d'un crochet selon l'invention.
Fig. 6 est une vue similaire à Fig. 5, le crochet étant en phase d'insertion dans le support.
Fig. 7 est une vue similaire à Fig. 5, le crochet étant inséré dans le support.
Fig. 8 est une vue en coupe latérale des éléments présentés Fig. 7.
Fig. 9 est une vue en perspective, avec parties transparentes, d'un premier mode de réalisation alternatif d'un crochet inférieur selon l'invention.
Fig. 10 est une vue en élévation latérale d'un second mode de réalisation alternatif d'un crochet inférieur selon l'invention.
Fig. 11 est une vue en coupe d'un autre mode réalisation d'un culot et d'une douille selon l'invention.
Fig. 12 est une vue similaire à Fig. 11, le culot étant en phase d'insertion dans la douille.
Fig. 13 est une vue similaire à Fig. 11, le culot étant inséré dans la douille.
Fig. 14 est une vue en perspective, avec parties transparentes, d'un autre mode de réalisation alternatif d'un crochet inférieur selon l'invention.
Fig. 15 est une vue en coupe latérale des éléments présentés Fig. 14.
Fig. 16 est une vue similaire à Fig. 15, le culot étant en phase d'insertion dans la douille.
Fig. 17 est une vue similaire à Fig. 15, le culot étant inséré dans la douille.

Dans toute la description qui suit de modes de réalisation d'un dispositif de suspension selon l'invention, les termes relatifs tels que « supérieur », « inférieur », « avant », « arrière », « horizontal » et « vertical » sont à interpréter lorsque le dispositif de suspension selon l'invention est installé en situation de fonctionnement ou dans une phase d'installation.

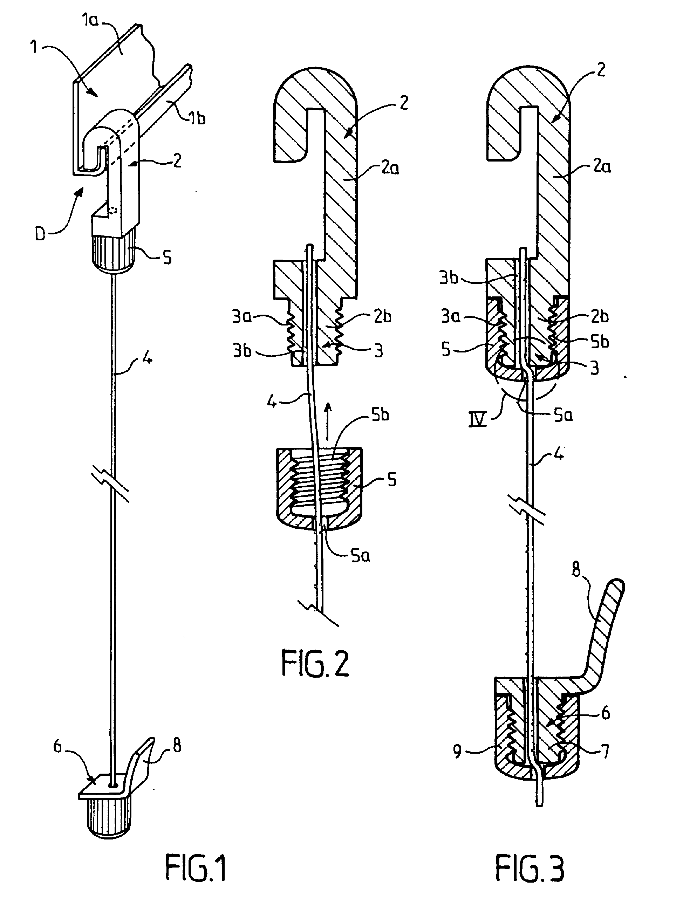

On peut voir Fig. 1 à Fig. 4 un dispositif D de suspension d'éléments sur un mur selon l'invention. Le dispositif D comprend un support 1 ou cimaise fixé sur un mur non-représenté par l'intermédiaire de fixations usuelles telles que des vis. Le support 1 est un profilé métallique en forme de cornière en U aux branches 1a et 1 b dissymétriques. La première branche 1a du U est fixé au mur tandis que la seconde branche 1b du U, de plus petite taille, forme un rail de fixation.

Un premier crochet 2 est mis en en place dans le rail formé par la seconde branche 1 b du support 1. Le crochet 2 comporte une partie supérieure recourbée 2a et une partie inférieure 2b formant culot 3. Le culot 3, de forme cylindrique, comporte un filetage externe 3a et un orifice longitudinal 3b. L'orifice longitudinal 3b est parallèle à l'axe géométrique du culot 3 mais excentré par rapport à celui-ci. L'orifice longitudinal 3b traverse le culot 3 de part en part ce qui permet le passage d'un lien flexible 4.

Le lien 4 est constitué d'un fil plastique, par exemple en nylon ou en perlon, ou d'un câble souple, d'une tresse métallique, d'une cordelette ou d'un élément flexible équivalent. Le perlon présente l'avantage de pouvoir être transparent ce qui est intéressant du point de vue esthétique.

Une première douille 5 est visée sur le filetage externe 3a du culot 3. La douille 5 a une forme de capuchon inversé dont le fond présente un orifice longitudinal 5a permettant le passage du lien 4. La douille 5 comporte également un filetage interne 5b permettant son vissage sur le culot 3.

L'excentration existant entre l'axe de l'orifice longitudinal 3b et l'axe géométrique du culot 3 est choisie en fonction du diamètre du lien 4. II est approprié de choisir une valeur d"excentration inférieure à une fois et demi le diamètre du lien.

Le dispositif D comporte également un second crochet 6. Le crochet 6 comporte une partie inférieure formant un culot 7 identique au culot 3. La partie supérieure du crochet 6 s'étend à partir du culot 7 pour former un doigt 8 ayant fonction d'attache.

Une seconde douille 9, identique à la douille 5, est vissée sur le culot 7.

Le montage du dispositif D selon l'invention s'effectue de la manière suivante.

Le support 1 est fixé au mur, généralement à proximité du plafond non-représenté.

Le lien 4 est livré sous forme de rouleau de grande longueur. Un opérateur enfile les différents éléments sur le lien 4, c'est-à-dire les crochets 2 et 6 et les douilles 5 et 9 de telle manière que le crochet 2 et la douille 5 se trouvent à proximité d'une extrémité du lien 4.

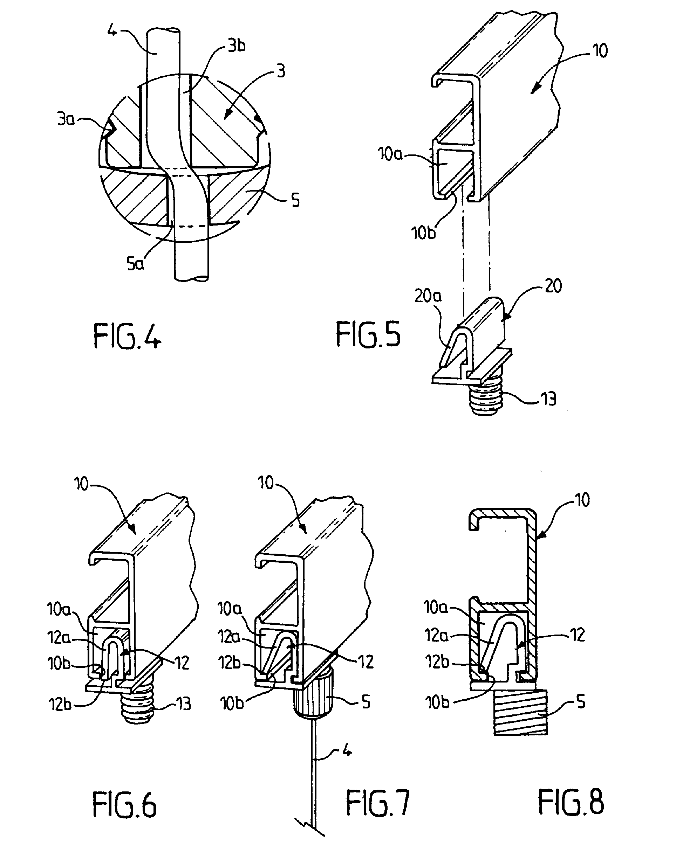

La douille 5 est alors vissée et serrée sur le culot 3 du crochet 2. Le lien 4 est ainsi pincé comme illustré Fig. 4. De cette façon le crochet 2 et la douille 5 sont rendus solidaires du lien 4.

De la même manière, le crochet 6 et la douille 9 sont rendus solidaires du lien 4 par vissage de la douille 9 sur le culot 7. La distance entre le doigt 8 et le crochet 2 peut être réglée en fonction des désirs de l'opérateur.

Le crochet 2 est ensuite accroché sur la branche 1 b du support 1. Le doigt 8 peut alors être utilisé pour accrocher un tableau ou tout autre élément similaire. La partie du lien 4 située sous la douille 9 peut alors être coupée ou enroulée de manière à être dissimulée derrière l'élément accroché sur le doigt 8.

Les différents éléments du dispositif selon l'invention peuvent être souvent réalisés dans n'importe quel matériau polymère thermoplastique et dans certaines applications en métal tel que l'aluminium.

En variante, il est possible de réaliser le support 1 sous la forme d'un profilé sensiblement rectangulaire 10 comportant en partie inférieure une alvéole 10a. La paroi inférieure de l'alvéole présente une rainure 10b.

Un crochet 12 est prévu en lieu et place du crochet 2. La partie inférieure du crochet 12 est identique à la partie inférieure du crochet 2 et forme un culot 13 identique au culot 3.

La partie supérieure du crochet 12 est réalisée sous la forme d'une lame flexible pliée en forme de U renversé. L'une des branches du U est solidaire du culot 13 tandis que l'autre branche est libre et forme un clip 12a.

Le montage du crochet 12 sur le lien 4 se fait de la même manière que dans le premier mode de réalisation, par pincement du lien 4 entre la douille 5 et le culot 13.

Néanmoins, la fixation du crochet 12 sur le support 10 est différente de la solution utilisée pour le crochet 2 et le support 1.

Le clip 12a est enfoncé dans la rainure 10b jusqu'à pénétrer dans l'alvéole 10a. Lorsque l'extrémité 12b du clip 12a n'est plus en contact avec le bord de la rainure 10b, le clip 12a se détend à l'intérieur de l'alvéole 10a et assure la fixation du crochet 12 sur le support 10.

Ce mode de réalisation permet l'utilisation d'un support 10 plus esthétique. En outre la partie supérieure du crochet 12 n'est pas visible de l'extérieur ce qui contribue également à l'esthétique du dispositif.

Selon un autre mode de réalisation du dispositif selon l'invention, l'orifice 5a de la douille 5 et l'orifice 3b du culot 3 ne sont pas excentrés. Une rondelle R est interposée entre la douille 5 et le culot 3. La rondelle R comporte un orifice R1 excentré. La rondelle R comporte un profil extérieur cylindrique mais il est également possible de choisir un profil différent afin de mieux l'adapter à une douille 5 de forme plus complexe.

Lors du montage, le lien 4 passe par l'orifice R1 et le serrage du culot 3 sur la douille 5 provoque le coincement du lien 4 par l'intermédiaire de la rondelle R.

De nombreuses variantes sont possibles à partir des modes de réalisations décrits.

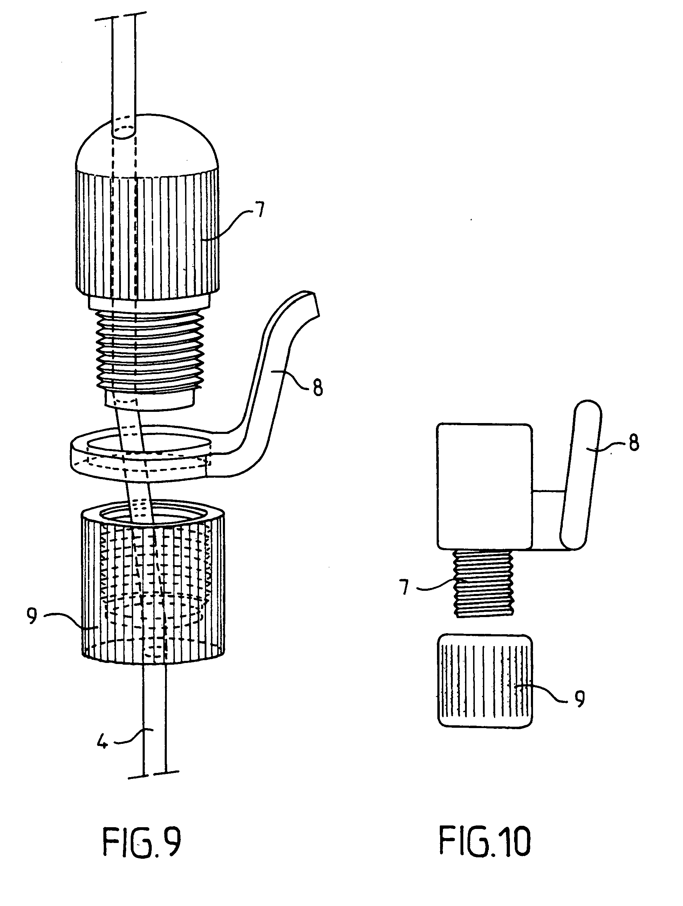

Fig. 9 illustre un mode de réalisation alternatif d'un crochet inférieur selon l'invention. Le doigt 8 est indépendant et n'est plus solidaire de la douille 9 ou du culot 7. Le doigt 8 est monté pivotant ce qui permet d'éviter qu'il ne soit bloqué dans une position défavorable à l'accrochage d'un élément.

Fig. 10 illustre un autre mode de réalisation alternatif d'un crochet inférieur selon l'invention. Ce mode de réalisation est proche de celui illustré Fig. 3, néanmoins le culot 7 comporte une partie supérieure se projetant vers le haut sensiblement jusqu'au niveau de l'extrémité supérieure du doigt 8. Une telle disposition peut permettre de faciliter l'accrochage des éléments.

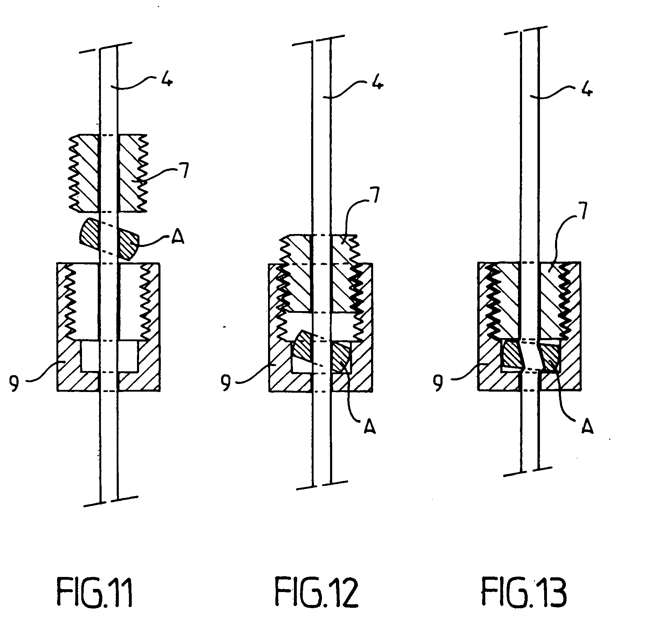

Fig. 11 à Fig. 13 illustrent autre mode réalisation d'un culot 7 et d'une douille 9 selon l'invention. Les orifices prévus dans le culot 7 et la douille 9 pour le passage du lien 4 ne sont ici pas excentrés. Une cale intermédiaire A en forme d'anneau est utilisée. La cale A comporte un orifice a1 pour le passage du lien 4 qui est incliné de telle sorte que lorsque la cale A est disposée horizontalement, l'orifice a1 n'est pas coaxial ave les orifices prévus dans la douille 9 et le culot 7. De cette façon, lorsque la cale A est bloquée entre le culot 7 et la douille 9, le lien 4 se trouve bloqué.

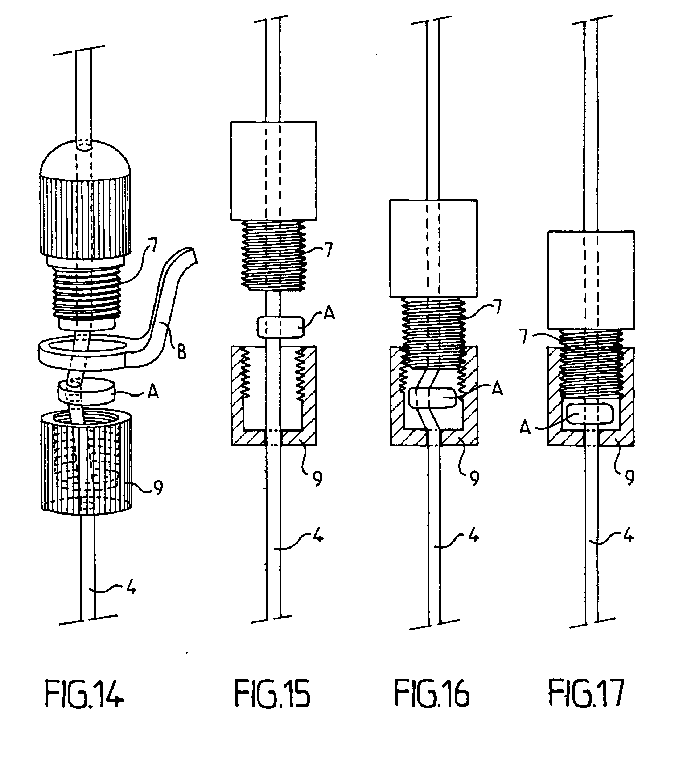

En variante il est possible de réaliser l'orifice de la cale A excentré comme illustré Fig. 14 à 17. Le passage du lien 4 dans l'orifice excentré de la cale A crée un trajet sinueux qui freine le lien 4. Lors du serrage de la douille 9 sur le culot 7, enfermant la cale 4, le lien 4 est alors bloqué.

## Revendications

1. Dispositif (D) de suspension d'éléments sur un mur comprenant à une première extrémité un crochet (2, 12) coopérant avec un support (1, 10) fixé au mur ou au plafond et, à une seconde extrémité une attache (6), apte à l'accrochage de l'élément à suspendre, reliée par un moyen de liaison au crochet (2, 12), le crochet (2, 12) et/ou l'attache (6) comprenant:
- un culot d'assemblage (3, 7, 13),
- une douille (5, 9) comportant une portion apte à coopérer avec le culot d'assemblage (3, 7, 13) pour permettre la fixation de la douille (5, 9) sur le culot (3, 7, 13),
le moyen de liaison étant un lien flexible (4) bloqué par la création d'un trajet sinueux entre le culot (3, 7, 13) et la douille (5, 9), **caractérisé en ce que** le culot (3, 7, 13) comporte un premier orifice longitudinal (3b) apte au passage du lien flexible (4), la douille (5, 9) comporte un second orifice longitudinal (5a) apte au passage du lien flexible (4), et au moins l'un des premier et second orifices longitudinaux (3b, 5a) est excentré.

2. Dispositif (D) de suspension d'éléments selon la revendication 1, **caractérisé en ce que** le culot (3, 7, 13) comporte un filetage externe (3a) apte à coopérer avec un filetage interne (5b) situé sur la douille (5, 9).

3. Dispositif (D) de suspension d'éléments selon la revendication 1 ou 2, **caractérisé en ce que** le premier orifice longitudinal (3b) est excentré par rapport à l'axe du culot (3, 7, 13).

4. Dispositif (D) de suspension d'éléments sur un mur comprenant à une première extrémité un crochet (2, 12) coopérant avec un support (1, 10) fixé au mur ou au plafond et, à une seconde extrémité une attache (6), apte à l'accrochage de l'élément à suspendre, reliée par un moyen de liaison au crochet (2, 12), le crochet (2, 12) et/ou l'attache (6) comprenant :
- un culot d'assemblage (3, 7, 13),
- une douille (5, 9) comportant une portion apte à coopérer avec le culot d'assemblage (3, 7, 13) pour permettre la fixation de la douille (5, 9) sur le culot (3, 7, 13),
le moyen de liaison étant un lien flexible (4) bloqué par la création d'un trajet sinueux entre le culot (3, 7, 13) et la douille (5, 9), **caractérisé en ce qu'**une rondelle est interposée entre le culot (3, 7, 13) et la douille (5, 9), la rondelle comportant un orifice traversé par le lien flexible (4).

5. Dispositif (D) de suspension d'éléments selon l'une quelconque des revendications 1 à 4, **caractérisé en ce que** le culot (3, 13) est solidaire du crochet (2, 12).

6. Dispositif (D) de suspension d'éléments selon l'une quelconque des revendications 1 à 4, **caractérisé en ce que** le culot (7) est solidaire de l'attache (6).

7. Dispositif (D) de suspension d'éléments selon l'une quelconque des revendications 1 à 6, **caractérisé en ce que** le crochet (2) est rigide.

8. Dispositif (D) de suspension d'éléments selon l'une quelconque des revendications 1 à 6, **caractérisé en ce que** le crochet (12) comporte une partie flexible formant clip (12a).

9. Dispositif (D) de suspension d'éléments selon la revendication 8, **caractérisé en ce que** le support (10) comporte une rainure longitudinale (10b) apte à recevoir la partie du crochet (12) formant clip (12a).

10. Dispositif (D) de suspension d'éléments selon l'une quelconque des revendications précédentes, **caractérisé en ce que** le culot (3, 7, 13) est réalisé en matériau polymère.

11. Dispositif (D) de suspension d'éléments selon l'une quelconque des revendications précédentes, **caractérisé en ce que** la douille (5, 9) est réalisée en aluminium.

12. Dispositif (D) de suspension d'éléments selon l'une quelconque des revendications précédentes, **caractérisé en ce qu'**une cale (A) est intercalée entre le culot (7) et la douille (9).

13. Dispositif (D) de suspension d'éléments selon l'une quelconque des revendications précédentes, **caractérisé en ce que** le crochet (2, 12) comporte un doigt (8) mobile en rotation par rapport au culot (7) et à la douille (9).

## Claims

1. Device (D) for suspending items on a wall comprising, at a first end, a hook (2, 12) cooperating with a support (1, 10) fixed to the wall or to the ceiling and, at a second end, an attachment (6), suitable for hanging the item to be suspended, linked by a link means to the hook (2, 12), the hook (2, 12) and/or the attachment (6) comprising:
- an assembly base (3, 7, 13),
- a bush (5, 9) comprising a portion suitable for cooperating with the assembly base (3, 7, 13) to allow the bush (5, 9) to be fixed to the base (3, 7, 13),
the link means being a flexible link (4) immobilized by the creation of a winding path between the base (3, 7, 13) and the bush (5, 9), **characterized in that** the base (3, 7, 13) comprises a first longitudinal orifice (3b) suitable for the passage of the flexible link (4), the bush (5, 9) comprises a second longitudinal orifice (5a) suitable for the passage of the flexible link (4), and at least one of the first and second longitudinal orifices (3b, 5a) is eccentric.

2. Device (D) for suspending items according to Claim 1, **characterized in that** the base (3, 7, 13) comprises an external threading (3a) suitable for cooperating with an internal threading (5b) situated on the bush (5, 9).

3. Device (D) for suspending items according to Claim 1 or 2, **characterized in that** the first longitudinal orifice (3b) is eccentric relative to the axis of the base (3, 7, 13).

4. Device (D) for suspending items on a wall comprising, at a first end, a hook (2, 12) cooperating with a support (1, 10) fixed to the wall or to the ceiling and, at a second end, an attachment (6), suitable for hanging the item to be suspended, linked by a link means to the hook (2, 12), the hook (2, 12) and/or the attachment (6) comprising:
- an assembly base (3, 7, 13),
- a bush (5, 9) comprising a portion suitable for cooperating with the assembly base (3, 7, 13) to allow the bush (5, 9) to be fixed to the base (3, 7, 13),
the link means being a flexible link (4) immobilized by the creation of a winding path between the base (3, 7, 13) and the bush (5, 9), **characterized in that** a washer is interposed between the base (3, 7, 13) and the bush (5, 9), the washer comprising an orifice passed through by the flexible link (4).

5. Device (D) for suspending items according to any one of Claims 1 to 4, **characterized in that** the base (3, 13) is attached to the hook (2, 12).

6. Device (D) for suspending items according to any one of Claims 1 to 4, **characterized in that** the base (7) is attached to the attachment (6).

7. Device (D) for suspending items according to any one of Claims 1 to 6, **characterized in that** the hook (2) is rigid.

8. Device (D) for suspending items according to any one of Claims 1 to 6, **characterized in that** the hook (12) has a flexible portion forming a clip (12a).

9. Device (D) for suspending items according to Claim 8, **characterized in that** the support (10) has a longitudinal groove (10b) suitable for receiving the portion of the hook (12) forming a clip (12a).

10. Device (D) for suspending items according to any one of the preceding claims, **characterized in that** the base (3, 7, 13) is made of a polymer material.

11. Device (D) for suspending items according to any one of the preceding claims, **characterized in that** the bush (5, 9) is made of aluminium.

12. Device (D) for suspending items according to any one of the preceding claims, **characterized in that** a shim (A) is inserted between the base (7) and the bush (9).

13. Device (D) for suspending items according to any one of the preceding claims, **characterized in that** the hook (2, 12) has a finger (8) which is mobile in rotation relative to the base (7) and to the bush (9).

## Patentansprüche

1. Vorrichtung (D) zum Aufhängen von Elementen an einer Wand, die an einem ersten Ende einen Haken (2, 12), der mit einer an der Wand oder an der Decke befestigten Halterung (1, 10) zusammenwirkt, und an einem zweiten Ende eine für das Einhaken des aufzuhängenden Elements geeignete Befestigung (6) umfasst, die über ein Verbindungsmittel mit dem Haken (2, 12) verbunden ist, wobei der Haken (2, 12) und/oder die Befestigung (6) umfassen:
- einen Verbindungssockel (3, 7, 13),
- eine Hülse (5, 9), die einen Abschnitt aufweist, der geeignet ist, mit dem Verbindungssockel (3, 7, 13) zusammenzuwirken, um die Befestigung der Hülse (5, 9) an dem Sockel (3, 7, 13) zu ermöglichen,
wobei das Verbindungsmittel ein flexibles Band (4) ist, das durch Erzeugen eines kurvigen Verlaufs zwischen dem Sockel (3, 7, 13) und der Hülse (5, 9) festgelegt ist, **dadurch gekennzeichnet, dass** der Sockel (3, 7, 13) eine für den Durchgang des flexiblen Bandes (4) geeignete erste Längsöffnung (3b) aufweist, die Hülse (5, 9) eine für den Durchgang des flexiblen Bandes (4) geeignete zweite Längsöffnung (5a) aufweist, und wenigstens eine der ersten und der zweiten Längsöffnung (3b, 5a) außermittig angeordnet ist.

2. Vorrichtung (D) zum Aufhängen von Elementen nach Anspruch 1, **dadurch gekennzeichnet, dass** der Sockel (3, 7, 13) ein Außengewinde (3a) aufweist, das geeignet ist, mit einem an der Hülse (5, 9) befindlichen Innengewinde (5b) zusammenzuwirken.

3. Vorrichtung (D) zum Aufhängen von Elementen nach Anspruch 1 oder 2, **dadurch gekennzeichnet, dass** die erste Längsöffnung (3b) gegenüber der Achse des Sockels (3, 7, 13) außermittig angeordnet ist.

4. Vorrichtung (D) zum Aufhängen von Elementen an einer Wand, die an einem ersten Ende einen Haken (2, 12), der mit einer an der Wand oder an der Decke befestigten Halterung (1, 10) zusammenwirkt, und an einem zweiten Ende eine für das Einhaken des aufzuhängenden Elements geeignete Befestigung (6) umfasst, die über ein Verbindungsmittel mit dem Haken (2, 12) verbunden ist, wobei der Haken (2, 12) und/oder die Befestigung (6) umfassen:
- einen Verbindungssockel (3, 7, 13),
- eine Hülse (5, 9), die einen Abschnitt aufweist, der geeignet ist, mit dem Verbindungssockel (3, 7, 13) zusammenzuwirken, um die Befestigung der Hülse (5, 9) an dem Sockel (3, 7, 13) zu ermöglichen,
wobei das Verbindungsmittel ein flexibles Band (4) ist, das durch Erzeugen eines kurvigen Verlaufs zwischen dem Sockel (3, 7, 13) und der Hülse (5, 9) festgelegt ist, **dadurch gekennzeichnet, dass** zwischen dem Sockel (3, 7, 13) und der Hülse (5, 9) eine Scheibe eingefügt ist, wobei die Scheibe eine von dem flexiblen Band (4) durchgriffene Öffnung aufweist.

5. Vorrichtung (D) zum Aufhängen von Elementen nach einem der Ansprüche 1 bis 4, **dadurch gekennzeichnet, dass** der Sockel (3, 13) mit dem Haken (2, 12) fest verbunden ist.

6. Vorrichtung (D) zum Aufhängen von Elementen nach einem der Ansprüche 1 bis 4, **dadurch gekennzeichnet, dass** der Sockel (7) mit der Befestigung (6) fest verbunden ist.

7. Vorrichtung (D) zum Aufhängen von Elementen nach einem der Ansprüche 1 bis 6, **dadurch gekennzeichnet, dass** der Haken (2) starr ist.

8. Vorrichtung (D) zum Aufhängen von Elementen nach einem der Ansprüche 1 bis 6, **dadurch gekennzeichnet, dass** der Haken (12) einen einen Clip (12a) bildenden flexiblen Teil umfasst.

9. Vorrichtung (D) zum Aufhängen von Elementen nach Anspruch 8, **dadurch gekennzeichnet, dass** die Halterung (10) eine Längsnut (10b) aufweist, die geeignet ist, den einen Clip (12a) bildenden Teil des Hakens (12) aufzunehmen.

10. Vorrichtung (D) zum Aufhängen von Elementen nach einem der vorstehenden Ansprüche, **dadurch gekennzeichnet, dass** der Sockel (3, 7, 13) aus polymerem Werkstoff gefertigt ist.

11. Vorrichtung (D) zum Aufhängen von Elementen nach einem der vorstehenden Ansprüche, **dadurch gekennzeichnet, dass** die Hülse (5, 9) aus Aluminium gefertigt ist.

12. Vorrichtung (D) zum Aufhängen von Elementen nach einem der vorstehenden Ansprüche, **dadurch gekennzeichnet, dass** zwischen dem Sockel (7) und der Hülse (9) ein Keil (A) eingefügt ist.

13. Vorrichtung (D) zum Aufhängen von Elementen nach einem der vorstehenden Ansprüche, **dadurch gekennzeichnet, dass** der Haken (2, 12) einen Finger (8) umfasst, der gegenüber dem Sockel (7) und der Hülse (9) drehbeweglich ist.
